# EUROPEAN PATENT APPLICATION

(11) **EP 3 168 732 A1**
(43) Date of publication of application: **17.05.2017**
(21) Application number: 16163402.7
(22) Date of filing: 31.03.2016
(51) Int. Cl.: G06F 3/0488

(54) **METHOD AND DEVICE FOR SWITCHING KEYBOARD STYLE**

(30) Priority: 13.11.2015 CN 201510781612
(71) Applicant: Xiaomi Inc., Beijing 100085 (CN)
(72) Inventor: WU, Liangxiong, 100085 Haidian District (CN); ZHANG, Liang, 100085 Haidian District (CN); WANG, Ke, 100085 Haidian District (CN)
(74) Representative: Loustalan, Paul William

(57) **Abstract**

A method and a device for switching a keyboard style are provided. The method includes: in a first scene interface displayed, starting a single-handed operation mode (101); judging whether a current keyboard style is a first keyboard style (102); and when it is determined that the current keyboard style is the first keyboard style, switching the first keyboard style into a second keyboard style in a second scene interface corresponding to the single-handed operation mode, wherein an input area in the first keyboard style has a smaller size than an input area in the second keyboard style (103). (Fig. 1)

## Description

### TECHNICAL FIELD

The present disclosure generally relates to the field of terminal technologies, and more particularly, to a method and a device for switching a keyboard style.

### BACKGROUND

As people have a higher and higher demand on the terminal display effect, display screens of present terminals are becoming bigger and bigger; a big-size display screen, while improving the display effect, also brings some inconvenience to the single-handed operations of users.

To facilitate users to perform single-handed operations on big-size display screens, terminals can provide a single-handed operation mode. When the single-handed operation mode is started, a terminal will zoom out the current display interface and display the zoomed-out display interface on the lower side of the display screen, so that users can perform a single-handed operation at any position on the zoomed-out display interface.

For example, a terminal displays an input area and a QWERTY keyboard in an input interface; if the single-handed operation mode is started, the terminal will zoom out the input interface and display the zoomed-out input area and the zoomed-out QWERTY keyboard in the zoomed-out input interface.

The embodiments of the present disclosure are presented to solve the problem that in the single-handed operation mode, an error operation may happen and user's normal input may be thus affected.

### SUMMARY

Accordingly, the present disclosure provides a method and a device for switching a keyboard style, and the technical solutions are as follows.

According to a first aspect of the embodiments of the present disclosure, a method for switching a keyboard style is provided, including:
in a first scene interface displayed, starting a single-handed operation mode;
determining whether a current keyboard style is a first keyboard style; and
when it is determined that the current keyboard style is the first keyboard style, switching the first keyboard style into a second keyboard style in a second scene interface corresponding to the single-handed operation mode, wherein an input area in the first keyboard style has a smaller size than an input area in the second keyboard style.

In this way, even if the keyboard is zoomed out, it is still guaranteed that the size of the input area will not be too small; therefore, the error operation during the user's input process is avoided, the impact to the normal input of the user is avoided and the input efficiency in the single-handed operation mode is improved.

In another embodiment, the method may further include:
when exiting from the single-handed operation mode, switching the second keyboard style into the first keyboard style in the first scene interface.

In another embodiment, the method may further include:
determining whether a keyboard includes the first keyboard style and the second keyboard style;
when it is determined that the keyboard includes the first keyboard style and the second keyboard style, displaying a prompt message, wherein the prompt message is for prompting a user whether to switch a keyboard style in the single-handed operation mode; and
when detecting a confirm operation to the prompt message, determining to switch the keyboard style in the single-handed operation mode.

In another embodiment, the switching the first keyboard style into a second keyboard style in a second scene interface corresponding to the single-handed operation mode if when it is determined that the current keyboard style is the first keyboard style may include:
when it is determined to switch the keyboard style in the single-handed operation mode and it is determined that the current keyboard style is the first keyboard style, switching the first keyboard style into the second keyboard style in the second scene interface.

In another embodiment, the switching the first keyboard style into a second keyboard style in a second scene interface corresponding to the single-handed operation mode when it is determined that the current keyboard style is the first keyboard style may include:
when it is determined that the current keyboard style is the first keyboard style and the current display screen is in a vertical screen state, switching the first keyboard style into the second keyboard style in the second scene interface corresponding to the single-handed operation mode.

In another embodiment, the method may further include:
the first keyboard style is a QWERTY style while the second keyboard style is a nine-square style.

According to a second aspect of the embodiments of the present disclosure, a device for switching a keyboard style is provided, including:
a mode processing module, which is configured to start a single-handed operation mode in a first scene interface displayed;
a first determining module, which is configured to determine whether a current keyboard style is a first keyboard style; and
a first switching module, which is configured to switch the first keyboard style into a second keyboard style in a second scene interface corresponding to the single-handed operation mode when it is determined that the current keyboard style is the first keyboard style, wherein an input area in the first keyboard style has a smaller size than an input area in the second keyboard style.

The device according to the second aspect, by switching the current first keyboard style in which the size of the input area is relatively smaller into the second keyboard style in which the size of the input area is relatively bigger while starting the single-handed operation mode, avoids the error operation during a user's input process, avoids the impact to user's normal input, improves the input efficiency in the single-handed operation mode and improves the user experience in the single-handed operation mode.

In another embodiment, the device may further include:
a second switching module, which is configured to switch the second keyboard style into the first keyboard style in the first scene interface when exiting from the single-handed operation mode.

In another embodiment, the device may further include:
a second determining module, which is configured to determine whether a keyboard includes the first keyboard style and the second keyboard style;
a prompt module, which is configured to display a prompt message when it is determined that the keyboard includes the first keyboard style and the second keyboard style, wherein the prompt message is for prompting a user whether to switch a keyboard style in the single-handed operation mode; and
a determination module, which is configured to determine to switch the keyboard style in the single-handed operation mode when detecting a confirm operation to the prompt message.

In another embodiment, the first switching module is further configured to switch the first keyboard style into the second keyboard style in the second scene interface when it is determined to switch the keyboard style in the single-handed operation mode and it is determined that the current keyboard style is the first keyboard style.

In another embodiment, the first switching module is further configured to switch the first keyboard style into the second keyboard style in the second scene interface corresponding to the single-handed operation mode when it is determined that the current keyboard style is the first keyboard style and the current display screen is in a vertical screen state.

In another embodiment, the first keyboard style is a QWERTY style while the second keyboard style is a nine-square style.

According to a third aspect of the embodiments of the present disclosure, a device for switching a keyboard style is provided, including:
a processor;
a memory which is configured to store instructions executable by the processor;
wherein the processor is configured to:
   in a first scene interface displayed, start a single-handed operation mode;
   determine whether a current keyboard style is a first keyboard style;
   when it is determined that the current keyboard style is the first keyboard style, switch the first keyboard style into a second keyboard style in a second scene interface corresponding to the single-handed operation mode, wherein an input area in the first keyboard style has a smaller size than an input area in the second keyboard style.

The processor may be further configured to carry out the method of switching a keyboard style as described herein.

According to the device provided by the third aspect of the embodiments, the current first keyboard style in which the size of the input area is relatively smaller is switched into the second keyboard style in which the size of the input area is relatively bigger while the single-handed operation mode is started, thereby avoiding the error operation during a user's input process, avoiding the impact to user's normal input and improving the input efficiency in the single-handed operation mode.

In one particular embodiment, the steps of the method for switching a keyboard style are determined by computer program instructions.

Consequently, according to a fourth aspect, the invention is also directed to a computer program for executing the steps of a method for switching a keyboard style as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that both the foregoing general description and the following detailed description are exemplary and explanatory only and are not restrictive of the present disclosure, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a method for switching a keyboard style according to an exemplary embodiment.
Fig. 2A is a flow chart showing a method for switching a keyboard style according to another exemplary embodiment.
Fig. 2B is a diagram illustrating a prompt message in a method for switching a keyboard style according to an exemplary embodiment.
Fig. 3 is a block diagram illustrating a device for switching a keyboard style according to an exemplary embodiment.
Fig. 4 is a block diagram illustrating a device for switching a keyboard style according to another exemplary embodiment.
Fig. 5 is a block diagram illustrating a device for switching a keyboard style according to an exemplary embodiment.

### DETAILED DESCRIPTION

For a better understanding of the purpose, technical scheme and advantages of the present disclosure, the implementation of the present disclosure is described below in further detail in conjunction with accompanying drawings.

Reference will now be made in detail to exemplary embodiments, examples of which are illustrated in the accompanying drawings. The following description refers to the accompanying drawings in which the same numbers in different drawings represent the same or similar elements unless otherwise represented. The implementation modes set forth in the following description of exemplary embodiments do not represent all implementations consistent with the embodiments of the present disclosure. Instead, they are merely examples of apparatuses and methods consistent with aspects related to the embodiments of the present disclosure as recited in the appended claims.

Before describing the embodiment in detail, it is first needed to illustrate the single-handed operation mode referred in the embodiment as follows:
when the display screen of a terminal is over large, a user cannot touch many positions on the display screen during the single-handed operation, which leads to a difficulty of implementing the single-handed operation. However, if the terminal starts the single-handed operation mode when the current scene interface is displayed, the terminal will zoom out the current scene interface and display the zoomed-out scene interface on the lower side of the display screen; then, the fingers of the user can touch any position on the zoomed-out scene interface, thereby implementing the single-handed operation in the zoomed-out scene interface.

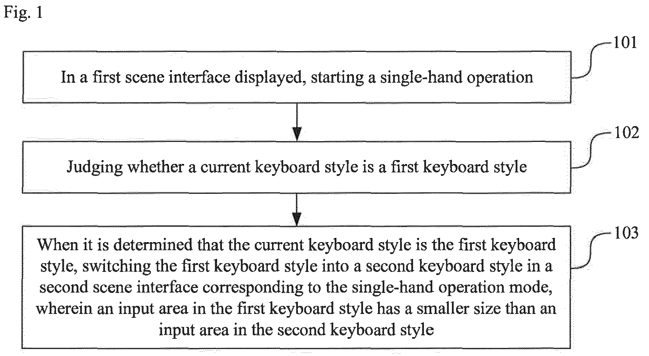

Fig. 1 is a flow chart showing a method for switching a keyboard style according to an exemplary embodiment. As shown in Fig. 1, the method for switching a keyboard style, which is applied to a terminal, includes the following steps:
Step 101: in a first scene interface displayed, starting a single-handed operation mode;
Step 102: determining or judging whether the current keyboard style is a first keyboard style;
Step 103: when it is determined that the current keyboard style is the first keyboard style, switching the first keyboard style into a second keyboard style in a second scene interface corresponding to the single-handed operation mode, wherein an input area in the first keyboard style has a smaller size than an input area in the second keyboard style.

In related art, if the single-handed operation mode is started when a user inputs through a keyboard, the current interface will be zoomed out and correspondingly the keyboard will be zoomed out. The Keyboard may include several keyboard styles, each of which has an input area with a different size from each other; if the current keyboard style is the one in which the input area has a smaller size, the input area will become too small when the keyboard is zoomed out, consequently, error operation is easily caused during the user's input process, user's normal input is affected and the input efficiency is very low.

In this embodiment, when the single-handed operation mode is started, if the current keyboard style is the first keyboard style in which the input area has a relatively smaller size, the terminal will automatically switch the first keyboard style into a second keyboard style in which the input area has a relatively bigger size, in this way, even if the keyboard is zoomed out, it is still guaranteed that the size of the input area will not be too small; therefore, the error operation during the user's input process is avoided, the impact to the normal input of the user is avoided and the input efficiency in the single-handed operation mode is improved.

The method provided in the embodiment, by switching the current first keyboard style in which the size of the input area is relatively smaller into a second keyboard style in which the size of the input area is relatively bigger while starting the single-handed operation mode, avoids the error operation during a user's input process, avoids the impact to user's normal input and improves the input efficiency in the single-handed operation mode.

In another embodiment, the method further includes:
when exiting from the single-handed operation mode, switching the second keyboard style into the first keyboard style in the first scene interface.

In another embodiment, the method further includes:
judging whether a keyboard includes the first keyboard style and the second keyboard style;
when it is determined that the keyboard includes the first keyboard style and the second keyboard style, displaying a prompt message, wherein the prompt message is for prompting a user whether to switch the keyboard style in the single-handed operation mode; and
when detecting a confirm operation to the prompt message, determining to switch the keyboard style in the single-handed operation mode.

In another embodiment, the step of switching the first keyboard style into a second keyboard style in a second scene interface corresponding to the single-handed operation mode when it is determined that the current keyboard style is the first keyboard style includes:
when it is determined to switch the keyboard style in the single-handed operation mode and it is determined that the current keyboard style is the first keyboard style, switching the first keyboard style into the second keyboard style in the second scene interface.

In another embodiment, the step of switching the first keyboard style into a second keyboard style in a second scene interface corresponding to the single-handed operation mode when it is determined that the current keyboard style is the first keyboard style includes:
when it is determined that the current keyboard style is the first keyboard style and the current display screen is in a vertical screen state, switching the first keyboard style into the second keyboard style in the second scene interface corresponding to the single-handed operation mode.

In another embodiment, the first keyboard style is a QWERTY style while the second keyboard style is a nine-square style.

All of the above optional technical schemes can form optional embodiments of the present disclosure by any combination, and no further description is needed here.

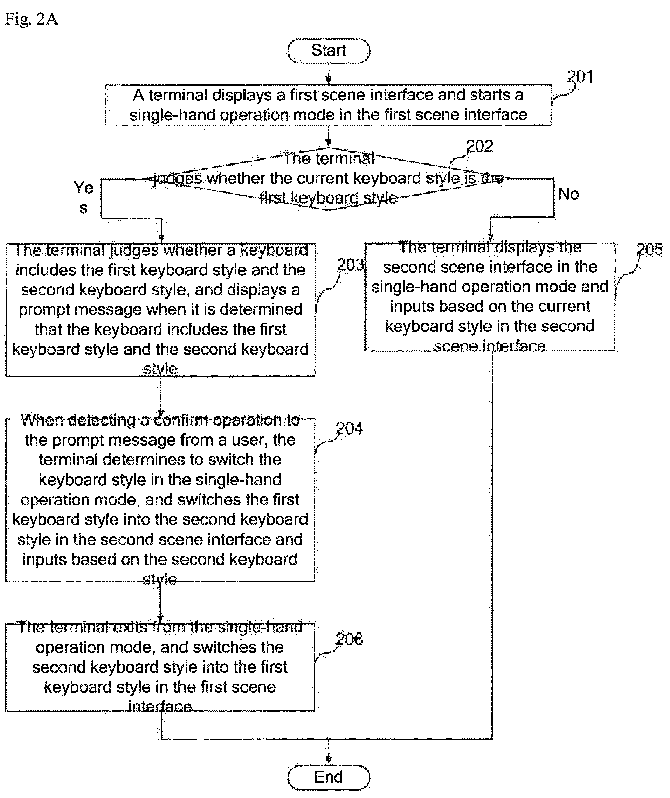

Fig. 2A is a flow chart showing a method for switching a keyboard style according to an exemplary embodiment; as shown in Fig. 2A, the method for switching a keyboard style, which is applied to a terminal, includes the following steps:
Step 201: the terminal displays a first scene interface and starts a single-handed operation mode in the first scene interface.

The terminal may be a mobile phone, a tablet computer, a computer and so on; particularly, the terminal may be equipment provided with a big-size display screen. This embodiment does not make a limit to the terminal.

In this embodiment, the mode in which the terminal exits from the single-handed operation mode is called a normal operation mode; the first scene interface, displayed by the terminal in the normal operation mode, has the same size as or a smaller size than the display screen of the terminal. This embodiment does not limit this.

For example, the first scene interface may be a call, a message, a game, a video play, a browser search and other interfaces displayed in the normal operation mode, which is not limited in this embodiment.

In the first scene interface, when the display screen of the terminal is too large, a user cannot touch many positions on the display screen in the single-handed operation mode, which leads to a difficulty of implementing the single-handed operations. To facilitate the single-handed operation of users, the terminal will start the single-handed operation mode in the first scene interface. Specifically, the single-handed operation may be automatically started by the terminal according to the data amount displayed in the first scene interface, or, may be started by a user's trigger operation, such as double-clicking the Home button of the terminal or long-pressing the display screen. This embodiment does not limit the start manner of the single-handed operation mode.

After the single-handed operation mode is started in the first scene interface displayed by the terminal, the terminal may zoom out the current scene interface and display the zoomed-out scene interface on the lower side of the display screen, that is the second scene interface, at which moment the fingers of a user can touch any position on the zoomed-out scene interface, thereby carrying out the single-handed operation in the zoomed-out scene interface.

After starting the single-handed operation mode while displaying the first scene interface, the terminal displays the second scene interface which has a smaller size than the first scene interface. Then, the terminal can display the second scene interface in a first preset scope of the display screen; in the following process when the terminal receives a position switching instruction for the second scene interface, the terminal can display the second scene interface in a second preset scope of the display screen.

The first preset scope and the second preset scope are located at different positions on the display screen, and specifically may be located at the central lower side, the left lower side, the right lower side and other positions convenient for users' single-handed operations. The first preset scope and the second preset scope may be set by the terminal in advance or by a user manually, which are not limited in this embodiment. In addition, the terminal may display a position switching option in the second scene interface; the position switching instruction can be triggered by a user clicking the position switching option or by other operations, which is not limited in this embodiment.

For example, when a user starts the single-handed operation mode by clicking the right lower side of the screen in the first scene interface, the terminal will display the second scene interface on the right lower side of the display screen, then the user can carry out single-handed operations with the right hand conveniently; when the user feels tired when operating with the right hand for a long time, the user can click the left lower side of the screen to trigger a position switching instruction; after receiving the position switching instruction, the terminal may display the second scene interface on the left lower side of the display screen, and the user can carry out single-handed operations with the left hand conveniently.

Step 202: the terminal judges whether the current keyboard style is the first keyboard style; if so, Step 203 is executed; otherwise, Step 205 is executed.

Considering that the size of the second scene interface displayed by the terminal is relatively smaller after the single-hand operation mode is started, if the user is to input through the keyboard in the second scene interface, the keyboard size displayed by the terminal is relatively smaller too. The Keyboard may include several keyboard styles, each of which has an input area with a different size from each other; if the current keyboard style is the one in which the input area has a smaller size, the input area will become too small when the keyboard is displayed according to the current keyboard style in the second scene interface, consequently, error operation is easily caused during the user's input process, user's normal input is affected and the input efficiency is too low. The input area of the keyboard may refer to the keys provided in the keyboard, or may refer to an area identifying the sliding operations of a user, which is not limited in this embodiment.

To solve the problem in the single-handed operation mode that the input area of the keyboard is too small, the terminal may judge in advance whether the current keyboard style is the first keyboard style when starting the single-handed operation mode. The first keyboard style is the one in which the input area has a relatively smaller size, for example, the first keyboard style may be a QWERTY style. In addition, the first keyboard style can be determined by the terminal according to the size of the input area of each keyboard style or can be set by a user; the first keyboard style may include one or more keyboard styles, which is not limited in this embodiment.

If the current keyboard style is the first keyboard style, it is indicated that after the single-handed operation mode is started, the size of the input area of the keyboard in the second scene interface is too small and it will impact the normal input of the user in the single-handed operation mode; to facilitate the normal input of the user in the single-handed operation, it is needed to switch the keyboard style when starting the single-handed operation mode, specifically, to execute Step 203, to avoid the error operation caused during the user's input process.

If the current keyboard style is not the first keyboard style, it is indicated that after the single-handed operation mode is started the size of the input area of the keyboard in the second scene interface is big enough and it will not impact the normal input of the user in the single-handed operation mode; thus the terminal does not need to switch the keyboard style when starting the single-handed operation mode, but directly executes Step 205 to display the second scene interface, in which the user can directly input based on the current keyboard style.

Step 203: the terminal judges whether the keyboard includes the first keyboard style and the second keyboard style, and displays a prompt message when it is determined that the keyboard includes the first keyboard style and the second keyboard style.

The second keyboard style is the one in which the input area has a relatively bigger size, for example, the second keyboard style may be a nine-square style or a handwritten keyboard style. The second keyboard style can be determined by the terminal according to the size of the input area of each keyboard style or can be set by a user, which can include one or more keyboard styles and is not limited in this embodiment.

An input area in the first keyboard style has a smaller size than an input area in the second keyboard style, for example, the first keyboard style is a QWERTY style while the second keyboard style is a nine-square style, or, the first keyboard style is a nine-square style while the second keyboard style is a handwritten style.

To improve efficiency, the terminal may further judge whether the keyboard includes the first keyboard style and the second keyboard style while determining that the current keyboard style is the first keyboard style. If the keyboard does not include the first keyboard style or the second keyboard style, it is indicated that the keyboard cannot be switched between the first keyboard style and the second keyboard style, and the terminal does not perform switch, but directly executes Step 205. However, if the keyboard includes the firs keyboard style and the second keyboard style, it is indicated that the keyboard can be switched between the first keyboard style and the second keyboard style; then, the terminal can display on the second scene interface a prompt message, wherein the prompt message is for prompting a user whether to switch the keyboard style in the single-handed operation mode, for the user to determine whether to switch the keyboard style.

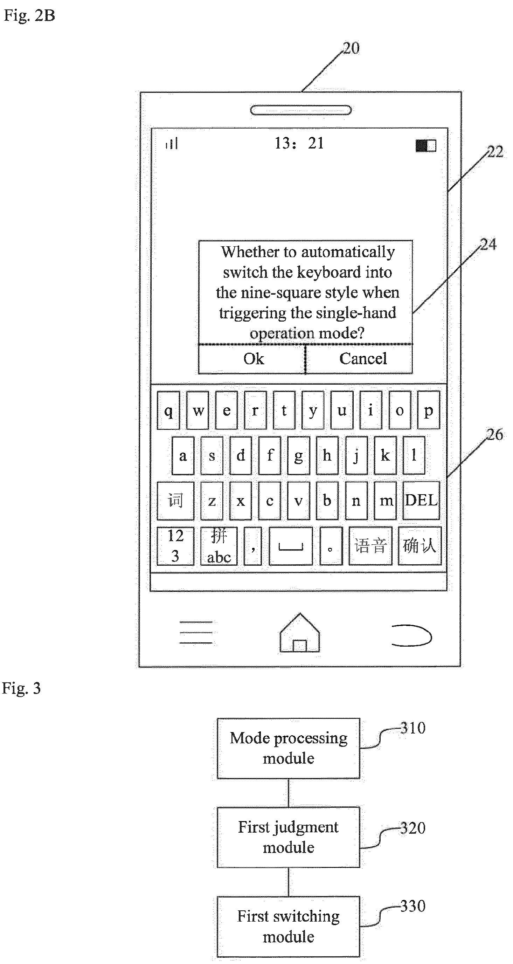

Refer to Fig. 2B, which is a diagram illustrating a prompt message. A terminal 20 displays in the normal operation mode an input interface 22 in which the keyboard style is a QWERTY style 26; the keyboard supports the switch between the QWERTY style and the nine-square style. To facilitate the normal input of a user in the single-handed operation mode, the terminal displays a prompt message 24, which prompts the user whether to automatically switch the keyboard into the nine-square style when triggering the single-handed operation mode.

It is to be noted that Step 203 is an optional step, which may not be executed by the terminal. When determining that the current keyboard style is the first keyboard style, the terminal directly switches the first keyboard style into the second keyboard style. Whether to execute Step 203 is not limited in this embodiment.

Step 204: when detecting that a user performs a confirm operation to the prompt message, the terminal determines to switch the keyboard style in the single-handed operation mode, and switches the first keyboard style into the second keyboard style in the second scene interface and inputs based on the second keyboard style. Then Step 206 is executed.

If the user agrees to switch the keyboard style in the single-handed operation mode, he/she can trigger a confirm operation to the prompt message; when detecting the confirm operation to the prompt message from the user, the terminal switches the first keyboard style into the second keyboard style in the second scene interface.

Refer to Fig. 2B, after the user clicks the OK button in the prompt message 24, the terminal detects the confirm operation to the prompt message from the user and determines that the user agrees to automatically switch the keyboard into the nine-square style while triggering the single-handed operation mode. After starting the single-handed operation mode, the terminal automatically switches the QWERTY style 26 shown in Fig. 2B into the nine-square style in the second scene interface; then, the user can input based on the nine-square style in the second scene interface.

In this embodiment, if the single-handed operation mode is started in the situation that the first scene interface displays the keyboard of the first keyboard style, the terminal will automatically switch the keyboard style and display the keyboard of the second keyboard style in the second scene interface. If the single-handed operation mode is started in the situation that the first scene interface does not display a keyboard, the terminal will automatically switch the keyboard style and display the second scene interface that is zoomed out from the first scene interface. In the following process if it is detected in the second scene interface the operation of invoking a keyboard from a user, the terminal displays the keyboard of the second keyboard style in the second scene interface, and the user can input based on the second keyboard style in the second scene interface.

In addition, if the current keyboard style is the first keyboard style, considering that the display area is big enough in the landscape mode, even if the single-handed operation mode is started in the landscape mode, the size of the input area in the first keyboard style is big enough in the second scene interface and no impact will be caused to the normal input of a user. Therefore, during actual implementation the keyboard style used in the single-handed operation mode may not be switched in the landscape mode while the keyboard style used in the single-handed operation mode needs to be switched in the vertical screen mode. That is to say, when it is determined the current keyboard style is the first keyboard style and the current display screen is in a vertical screen state, the first keyboard style is switched into the second keyboard style in the second scene interface.

For example, when it is determined that the keyboard style is the first keyboard style, it is judged whether the current display screen is in a vertical screen state. If the current display screen is in the vertical screen state, the first keyboard style is switched into the second keyboard style in the second scene interface and input is performed based on the second keyboard style. However, if the current display screen is in a landscape state, the keyboard style is not switched and input is still performed based on the first keyboard style.

It is to be noted that this embodiment is illustrated by taking Step 203 and Step 204 being executed while the single-handed operation mode is started for example. However, during actual implementation, Step 203 and Step 204 may be executed at any time in the normal operation mode, for example, Step 203 and Step 204 may be executed when it is detected in the normal operation mode an operation of invoking a keyboard from a user or when the terminal is restarted. The execution time of Step 203 and Step 204 is not limited in this embodiment.

Step 205: the terminal displays the second scene interface in the single-handed operation mode and inputs based on the current keyboard style in the second scene interface.

When the single-handed operation mode is started, the terminal does not switch the current keyboard style but directly displays the second scene interface. In the following process when it is detected an operation of invoking a keyboard from a user, the terminal still displays the current keyboard style in the second scene interface, that is, the keyboard style used before the single-handed operation mode is started, at which moment the user can input based on the current keyboard style.

Step 206: the terminal exits from the single-handed operation mode, and switches the second keyboard style into the first keyboard style in the first scene interface.

Specifically, the terminal can exit from the single-handed operation mode automatically according to the data amount displayed in the first scene interface or according to an operation triggered by a user in the single-handed operation mode, such as double-clicking the Home button or long-pressing the display screen. This embodiment does not limit the exit manner.

When the terminal exits from the single-handed operation mode, the terminal returns from the second keyboard style to the first keyboard style used before the single-handed operation mode is started; in the following process, when an operation of invoking a keyboard from a user is detected, the terminal may display the keyboard according to the first keyboard style in the first scene interface and the user can input based on the first keyboard style.

For example, if the keyboard style used before the single-handed operation mode is started is a QWERTY style while the keyboard style used in the single-handed operation mode is a nine-square style, then the terminal return the keyboard style to the QWERTY style while exiting from the single-handed operation mode, at which moment the user can input through the keyboard displayed in the QWERTY style.

During actual implementation, when starting the single-handed operation mode, the terminal may record the first keyboard style before switching the keyboard style and then switch the first keyboard style into the second keyboard style, and finally switch the second keyboard style into the recorded first keyboard style when exiting from the single-handed operation mode.

This embodiment can be applied to the input applications. In the scene interface of a current application, the input application can display the keyboard in the current scene interface and switch a keyboard style by calling the interface between the input application and the current application.

In related art, after starting the single-handed operation mode, the terminal only zooms out the scene interface, but does not optimize the usage scene of users in the single-handed operation mode or consider the input difficulty in the zoomed-out scene interface, which leads to a poor user experience and an incapability of meeting users' experience requirements. In this embodiment, after the single-handed operation mode is started, the terminal optimizes the switch of a keyboard style in the single-handed operation mode and provides a better input experience for users.

The method provided in this embodiment, by switching the current first keyboard style in which the size of the input area is relatively smaller into the second keyboard style in which the size of the input area is relatively bigger while starting the single-handed operation mode, avoids the error operation during a user's input process, avoids the impact to user's normal input, improves the input efficiency in the single-handed operation mode and improves the user experience in the single-handed operation mode.

Fig. 3 is a block diagram illustrating a device for switching a keyboard style according to an exemplary embodiment. The device may be a mobile phone, a tablet computer, a computer and other devices. Referring to Fig. 3, the device for switching a keyboard style may include a mode processing module 310, a first judgment module 320 and a first switching module 330.

The mode processing module 310 is configured to start a single-handed operation mode in a first scene interface displayed.

The first judgment module 320 is configured to judge whether a current keyboard style is a first keyboard style.

The first switching module 330 is configured to switch the first keyboard style into a second keyboard style in a second scene interface corresponding to the single-handed operation mode when it is determined that the current keyboard style is the first keyboard style, wherein an input area in the first keyboard style has a smaller size than an input area in the second keyboard style.

The device provided in this embodiment, by switching the current first keyboard style in which the size of the input area is relatively smaller into the second keyboard style in which the size of the input area is relatively bigger while starting the single-handed operation mode, avoids the error operation during a user's input process, avoids the impact to user's normal input, improves the input efficiency in the single-handed operation mode and improves the user experience in the single-handed operation mode.

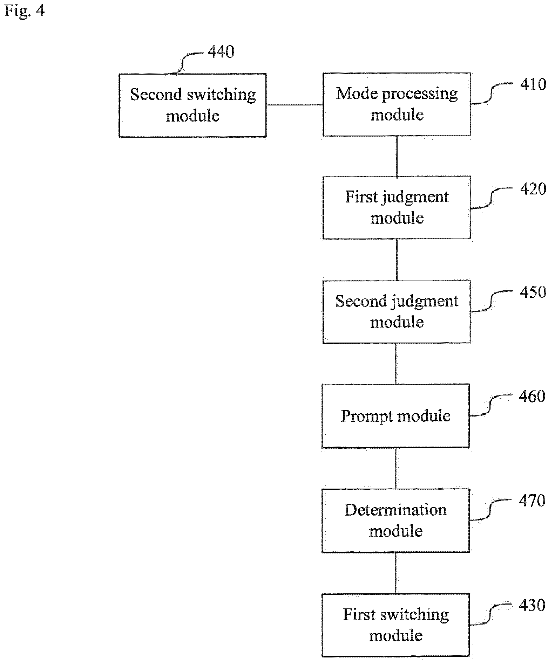

Fig. 4 is a block diagram illustrating a device for switching a keyboard style according to another exemplary embodiment. The device may be a mobile phone, a tablet computer, a computer and other devices. Referring to Fig. 4, the device for switching a keyboard style may include a mode processing module 410, a first judgment module 420 and a first switching module 430.

The mode processing module 410 is configured to start a single-handed operation mode in a first scene interface displayed.

The first judgment module 420 is configured to judge whether the current keyboard style is a first keyboard style.

The first switching module 430 is configured to switch the first keyboard style into a second keyboard style in a second scene interface corresponding to the single-handed operation mode when it is determined that the current keyboard style is the first keyboard style, wherein an input area in the first keyboard style has a smaller size than an input area in the second keyboard style.

In another embodiment, the device may further include:
a second switching module 440, which is configured to switch the second keyboard style into the first keyboard style in the first scene interface when exiting from the single-handed operation mode.

In another embodiment, the device may further include:
a second judgment module 450, which is configured to judge whether a keyboard includes the first keyboard style and the second keyboard style;
a prompt module 460, which is configured to display a prompt message when it is determined that the keyboard includes the first keyboard style and the second keyboard style, wherein the prompt message is for prompting a user whether to switch the keyboard style in the single-handed operation mode;
a determination module 470, which is configured to determine to switch the keyboard style in the single-handed operation mode when detecting a confirm operation to the prompt message.

In another embodiment, the first switching module 430 is further configured to switch the first keyboard style into the second keyboard style in the second scene interface when it is determined to switch the keyboard style in the single-handed operation mode and it is determined that the current keyboard style is the first keyboard style.

In another embodiment, the first switching module 430 is further configured to switch the first keyboard style into the second keyboard style in the second scene interface corresponding to the single-handed operation mode when it is determined that the current keyboard style is the first keyboard style and the current display screen is in a vertical screen state.

In another embodiment, the first keyboard style is a QWERTY style while the second keyboard style is a nine-square style.

For the device provided in this embodiment, the specific manner for each module to execute operations has been described in detail in the embodiments of the related method. No further description is needed here.

The device provided in this embodiment, by switching the current first keyboard style in which the size of the input area is relatively smaller into the second keyboard style in which the size of the input area is relatively bigger while starting the single-handed operation mode, avoids the error operation during a user's input process, avoids the impact to user's normal input, improves the input efficiency in the single-handed operation mode and improves the user experience in the single-handed operation mode.

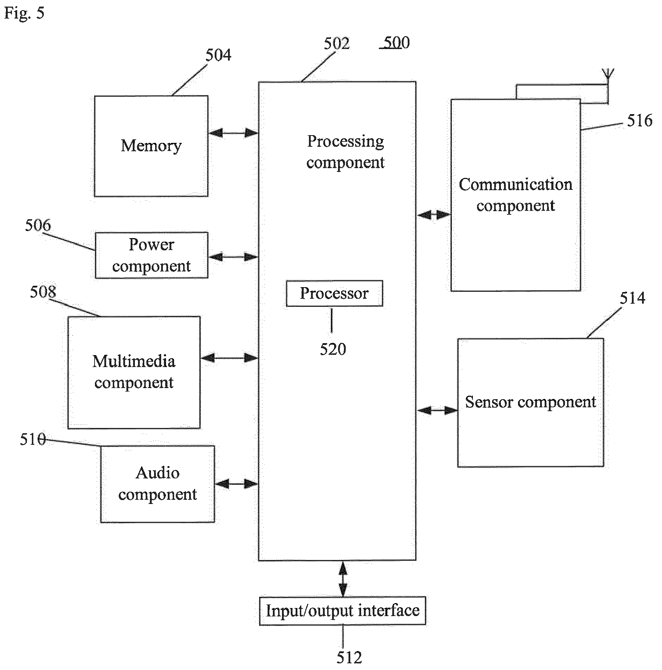

Fig. 5 is a block diagram illustrating a device 500 for switching a keyboard style according to an exemplary embodiment. The device 500 may be a mobile phone, a tablet computer, a computer and other devices.

Referring to Fig. 5, the device 500 may include one or more of the following components: a processing component 502, a memory 504, a power component 506, a multimedia component 508, an audio component 510, a sensor component 514 and a communication component 516.

The processing component 502 typically controls overall operation of the device 500, such as the operations associated with display, telephone calls, data communications, camera operations and recoding operations. The processing component 502 may include one or more processors 520 to execute instructions, so as to complete all or part steps of the above method. Moreover, the processing component 502 may include one or more modules which facilitate the interaction between the processing module 502 and other components. For instance, the processing component 502 may include a multimedia module to facilitate the interaction between the multimedia component 508 and the processing component 502.

The memory 504 is configured to store various types of data to support the operation of the device 500. Examples of such data include instructions for any applications or methods operated on the device 500. The memory 504 may be implemented using any type of volatile or non-volatile memory devices, or a combination thereof, for example, a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic disk or an optical disk. The memory 504 also stores one or more modules which are configured to be executed by one or more processors 520 to complete all or part of steps in the method shown in any one of Fig. 1, Fig. 2A and Fig. 3.

The power component 506 is configured to supply power to each component of the device 500. The power component 506 may include a power management system, one or more power sources, and any other components associated with the generation, management and distribution of electrical power in the device 500.

The multimedia component 508 includes a screen providing an output interface between the device 500 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action.

The audio component 510 is configured to output and/or input audio signals. For example, the audio component 510 includes a microphone (MIC) configured to receive an external audio signal when the device 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The sensor component 514 includes one or more sensors to provide status assessments of various aspects of the device 500. For instance, the sensor component 514 may detect an open/closed status of the device 500, relative positioning of components, a change in position of the device 500 or a component of the device 500, and a change in temperature of the device 500. The sensor component 514 may include a magnetic sensor, a pressure sensor, or a temperature sensor.

The communication component 516 is configured to facilitate communication, wired or wirelessly, between the device 500 and other devices. The device 500 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a Near Field Communication (NFC) module to facilitate short-range communications. For example, the NFC module may be implemented based on a Radio Frequency Identification (RFID) technology, an Infrared Data Association (IrDA) technology, an Ultra-Wideband (UWB) technology, a Bluetooth (BT) technology, and other technologies.

In exemplary embodiments, the device 500 may be implemented with one or more Application Specific Integrated Circuits (ASICs), Digital Aignal Processors (DSPs), Digital Signal Processing Devices (DSPDs), Programmable Logic Devices (PLDs), Field Programmable Gate Arrays (FPGAs), controllers, micro-controllers, microprocessors, or other electronic components, for performing the above described method to switch a keybaord style.

In exemplary embodiments, there is also provided a non-transitory computer-readable storage medium including instructions, such as included in the memory 504, executable by the processor 520 in the device 500, for performing the above-described method for switching a keyboard style. For example, the non-transitory computer-readable storage medium may be a ROM, a Random-Access Memory (RAM), a Compact Disc Read - Only Memory (CD-ROM), a magnetic tape, a floppy disc, an optical data storage device, and the like.

Other embodiments of the present disclosure will be apparent to those skilled in the art from consideration of the specification and practice of the present disclosure provided here. This application is intended to cover any variations, uses, or adaptations of the embodiments of the present disclosure following the general principles thereof and including such departures from the embodiments of the present disclosure as come within known or customary practice in the art. It is intended that the specification and examples be considered as exemplary only, with a true scope and spirit of the embodiments of the present disclosure being indicated by the following claims.

It will be appreciated that the embodiments of the present disclosure are not limited to the exact construction that has been described above and illustrated in the accompanying drawings, and that various modifications and changes can be made without departing from the scope thereof. It is intended that the scope of the embodiments of the present disclosure only be limited by the appended claims.

### INDUSTRY APPLICABLITY

The method and device provided in the embodiments of the present disclosure, by switching the current first keyboard style in which the size of the input area is relatively smaller into the second keyboard style in which the size of the input area is relatively bigger while starting the single-handed operation mode, avoids the error operation during a user's input process, avoids the impact to user's normal input, improves the input efficiency in the single-handed operation mode and improves the user experience in the single-handed operation mode.

## Claims

1. A method for switching a keyboard style, comprising:
in a first scene interface displayed, starting a single-handed operation mode (101);
determining whether a current keyboard style is a first keyboard style (102); and
when it is determined that the current keyboard style is the first keyboard style, switching the first keyboard style into a second keyboard style in a second scene interface corresponding to the single-handed operation mode, wherein an input area in the first keyboard style has a smaller size than an input area in the second keyboard style (103).

2. The method according to claim 1, further comprising:
upon exiting from the single-handed operation mode, switching the second keyboard style into the first keyboard style in the first scene interface (206).

3. The method according to claim 1 or 2, further comprising:
determining whether a keyboard includes the first keyboard style and the second keyboard style (203);
when it is determined that the keyboard includes the first keyboard style and the second keyboard style, displaying a prompt message, wherein the prompt message is for prompting a user whether to switch a keyboard style in the single-handed operation mode (203); and
when detecting a confirm operation to the prompt message, determining to switch the keyboard style in the single-handed operation mode (204).

4. The method according to claim 3, wherein the step of switching the first keyboard style into a second keyboard style in a second scene interface corresponding to the single-handed operation mode when it is determined that the current keyboard style is the first keyboard style comprises:
when it is determined to switch the keyboard style in the single-handed operation mode and it is determined that the current keyboard style is the first keyboard style, switching the first keyboard style into the second keyboard style in the second scene interface.

5. The method according to any of the preceding claims, wherein the step of switching the first keyboard style into a second keyboard style in a second scene interface corresponding to the single-handed operation mode when it is determined that the current keyboard style is the first keyboard style comprises:
when it is determined that the current keyboard style is the first keyboard style and the current display screen is in a vertical screen state, switching the first keyboard style into the second keyboard style in the second scene interface corresponding to the single-handed operation mode.

6. The method according to any one of claims 1 to 5, wherein the first keyboard style is a QWERTY style while the second keyboard style is a nine-square style.

7. A device for switching a keyboard style, comprising:
a mode processing module(310), which is configured to start a single-handed operation mode in a first scene interface displayed;
a first determining module(320), which is configured to determine whether a current keyboard style is a first keyboard style; and
a first switching module(330), which is configured to switch the first keyboard style into a second keyboard style in a second scene interface corresponding to the single-handed operation mode when it is determined that the current keyboard style is the first keyboard style, wherein an input area in the first keyboard style has a smaller size than an input area in the second keyboard style.

8. The device according to claim 7, further comprising:
a second switching module(440), which is configured to switch the second keyboard style into the first keyboard style in the first scene interface when exiting from the single-handed operation mode.

9. The device according to claim 7 or 8, further comprising:
a second determining module(450), which is configured to determine whether a keyboard includes the first keyboard style and the second keyboard style;
a prompt module(460), which is configured to display a prompt message when it is determined that the keyboard includes the first keyboard style and the second keyboard style, wherein the prompt message is for prompting a user whether to switch a keyboard style in the single-handed operation mode; and
a determination module(470), which is configured to determine to switch the keyboard style in the single-handed operation mode when detecting a confirm operation to the prompt message.

10. The device according to claim 9, wherein the first switching module is further configured to switch the first keyboard style into the second keyboard style in the second scene interface when it is determined to switch the keyboard style in the single-handed operation mode and it is determined that the current keyboard style is the first keyboard style.

11. The device according to any of claims 7 to 10, wherein the first switching module is further configured to switch the first keyboard style into the second keyboard style in the second scene interface corresponding to the single-handed operation mode when it is determined that the current keyboard style is the first keyboard style and the current display screen is in a vertical screen state.

12. The device according to any of claims 7 to 11, wherein the first keyboard style is a QWERTY style while the second keyboard style is a nine-square style.

13. A device for switching a keyboard style, comprising:
a processor;
a memory which is configured to store instructions executable by the processor;
wherein the processor is configured to carry out the method of any of claims 1 to 6.

14. A computer program including instructions for executing the steps of a method for switching a keyboard style according to any one of claims 1 to 6 when said program is executed by a computer.

15. A recording medium readable by a computer and having recorded thereon a computer program including instructions for executing the steps of a method for switching a keyboard style according to any one of claims 1 to 6.
